# EUROPÄISCHE PATENTSCHRIFT

(11) **EP 1 226 373 B1**
(45) Veröffentlichungstag und Bekanntmachung des Hinweises auf die Patenterteilung: **02.07.2003**
(21) Anmeldenummer: 00966116.6
(22) Anmeldetag: 05.10.2000
(51) Int. Cl.: F16H 25/22

(54) **GEWINDETRIEB MIT EINER SPINDEL UND EINER MUTTER**
THREADED MECHANISM WITH A SPINDLE AND A NUT
MECANISME FILETE COMPORTANT UNE BROCHE ET UN ECROU

(30) Priorität: 06.11.1999 DE 19953378
(43) Veröffentlichungstag der Anmeldung: 31.07.2002
(73) Patentinhaber: INA-Schaeffler KG, 91074 Herzogenaurach (DE)
(72) Erfinder: WIEHL, Hermann, 91074 Herzogenaurach (DE)
(86) Internationale Anmeldenummer: EP0009737
(87) Internationale Veröffentlichungsnummer: WO01035001

(56) Entgegenhaltungen:
- DE-A- 4 131 486
- DE-A- 19 652 181
- US-A- 2 895 343
- US-A- 3 009 367

## Beschreibung

### Gebiet der Erfindung

Die Erfindung betrifft einen Gewindetrieb, entsprechend dem Oberbegriff des Anspruchs 1. Ein solcher Gewindetrieb ist aus dem gattungsgemässen Dokument DE-A-19652181, bekannt.

### Hintergrund der Erfindung

Ein solcher Gewindetrieb ermöglicht die Umwandlung einer Rotationsbewegung in eine Translationsbewegung. Aus dem Dokument EP 0 132 492 A1 ist ein mit Kugeln als Wälzkörper ausgeführtes Schraubgetriebe bekannt, bei welchem in einem hohlzylindrischen Mutternkörper für die Führung der Kugeln ein Profilring drehfest angeordnet ist. Dieser besteht aus im Querschnitt rinnenförmigem Stahiblechmaterial. Der Mutternkörper besteht aus Kunststoffmaterial oder einer metallischen Druckgusslegierung und die Befestigung des Profilringes darin ist beim Spritzen oder Gießen erfolgt. Daher ergibt sich für die als massiver Ring ausgeführte Mutter mit dem darin befestigten Profilring ein großes Radialmaß.

### Zusammenfassung der Erfindung

Der Erfindung liegt die Aufgabe zu Grunde, einen Gewindetriebe zu schaffen, der einen nur geringen Bauraum in radialer Richtung benötigt.

Diese Aufgabe wird erfindungsgemäß dadurch gelöst, dass die Mutter aus einer Blechhülse und einem darin eingesetzten, von einem ersten Ring und einem zweiten Ring gebildeten Aushebe- und Umlenkstück für die Wälzkörper zusammengesetzt ist, wobei die Gewindenut der Mutter unmittelbar in der Blechhülse eingeformt ist. Auf diese Weise lässt sich das Radialmaß der Mutter, selbst im Bereich der Wälzkörperrückführung von dem Auslaufende zu dem Einlaufende einer Windung, auf den Radius der Spindel zuzüglich des Wälzkörpermaßes und der Dicke der Blechhülse reduzieren.

Der erste Ring und der zweite Ring können in der Blechhülse im Bereich der Gewindenut der Mutter in einem axialen Abstand voneinander gehalten sein, welcher der Dickenabmessung der Wälzkörper entspricht.

Für die Rückführung der Wälzkörper von dem Auslaufende der gemeinsamen Windung der Gewindenuten zu dem Einlaufende dieser Windung kann ein Überleitkanal in der Blechhülse in einem Umfangsbereich eingeformt sein. Als Wälzkörper können Kugeln oder Rollen verwendet werden. In der Blechhülse kann zusätzlich zu dem ersten Ring und dem zweiten Ring des Aushebe- und Umlenkstücks ein Gleitlagerring eingesetzt sein.

Die Blechhülse lässt sich aus einem Rohrstück oder Ziehrohling beispielsweise durch Gummiaufweiten herstellen. Mit der Erfindung lässt sich somit ein Gewindetrieb spanlos und damit kostengünstig herstellen, der wenig Bauraum benötigt. Darin wird der Wälzkörpersatz durch die Gewindegänge mittels der Blechhülse geführt, die gehärtet sein kann. Das Aushebe- und Umlenkstück hebt den Wälzkörpersatz über die Gewindeflanke und führt die Wälzkörper in den ursprünglichen Gewindegang zurück. Somit ist ein eingängiger Gewindetrieb geschaffen. Das Aushebe- und Umlenkstück kann aus einem elastomeren Werkstoff hergestellt sein und wird bei der Montage mit dem Wälzkörpersatz in die Blechhülse eingefügt und eingebördelt. Es empfiehlt sich, das Aushebeund Umlenkstück so zu formen, dass die Wälzkörper auch ohne Spindel sicher gehalten und geführt werden, so dass diese aus der Mutter nicht herausfallen, wenn die Mutter auf Kundenwunsch ohne Spindel geliefert wird.

Der Gleitlagerring wird in die Blechhülse eingesetzt, um eine seitliche Verkippung der Spindelmutter zu verhindern. Das zweiteilige Aushebe- und Umlenkstück kann aus einem elastomeren Werkstoff im Kunststoffspritzverfahren hergestellt werden.

### Kurze Beschreibung der Zeichnung

Ausführungsbeispiele der Erfindung sind in der Zeichnung dargestellt und werden im folgenden näher beschrieben. Es zeigen:
- Figur 1: einen erfindungsgemäßen Kugelgewindetrieb mit einer Mutter, die eine Spindel umgibt, im Längsschnitt;
- Figur 2: einen gegenüber Figur 1 um 90° gedrehten Längsschnitt durch den Kugelgewindetrieb, in welchem ein Überleitkanal der Mutter erkennbar ist;
- Figur 3: einen Teilquerschnitt durch den Kugelgewindetrieb nach Figur 2;
- Figur 4: den Längsschnitt eines weiteren Kugelgewindetriebes, in welchem ein Gleitlagerring angeordnet ist;
- Figuren 5 bis 7: drei verschiedene Stationen eines Kugelumlaufs eines Gewindetriebes in Teillängsschnitten;
- Figuren 8 bis 10: drei verschiedene Stationen eines Rollenumlaufs eines Gewindetriebes in Teillängsschnitten.

### Ausführliche Beschreibung der Zeichnung

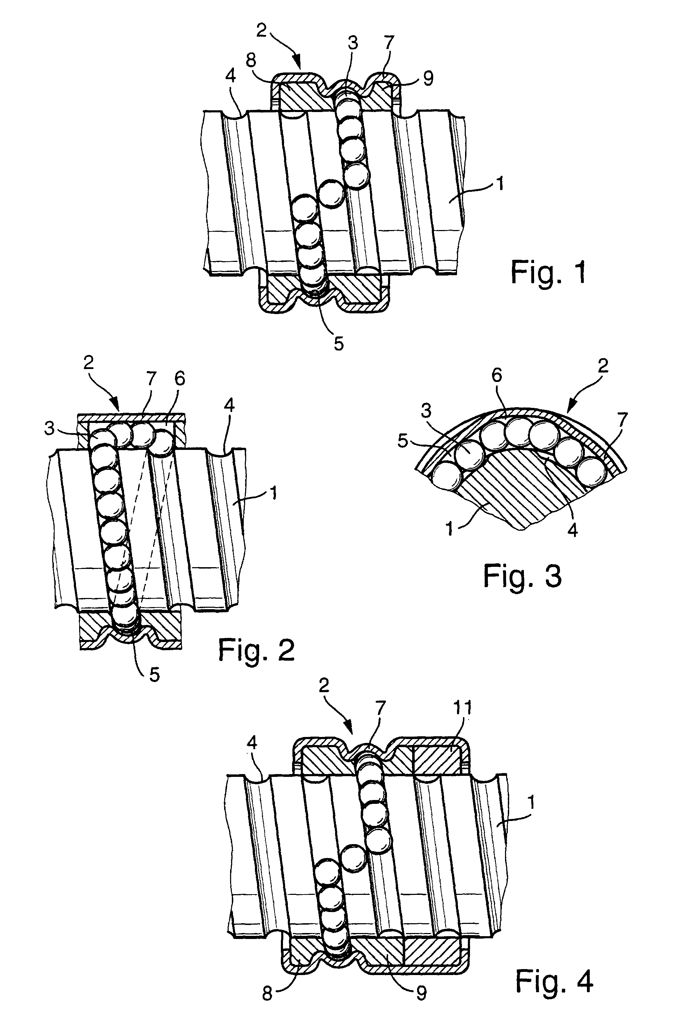

Éin in den Figuren 1 bis 3 und 5 bis 7 dargestellter erfindungsgemäßer Kugelgewindetrieb besteht aus einer Spindel 1, einer Mutter 2 und einem Umlauf von Kugeln 3, die sich in einer Gewindenut 4 der Spindel 1 und in einer Gewindenut 5 der Mutter 2 abwälzen können. Die Kugeln 3 bilden einen geschlossenen Umlauf, der sich über eine Windung der Gewindenut 4 der Spindel 1 und der zugehörigen Gewindenut 5 der Mutter 2 erstreckt. Am Ende dieser Windung werden die Kugeln 3 von einer Rückführvorrichtung aus der Gewindenut 4 der Spindel 1 herausgehoben und gelangen in einem Überleitkanal 6 der Mutter 2 zurück an den Anfang derselben Windung.

Die Mutter 3 besteht aus einer dünnen Blechhülse 7 und einem darin angeordnetem Aushebe- und Umlenkstück. Dieses ist zweiteilig ausgeführt und wird von einem ersten Ring 8 und einem zweiten Ring 9 gebildet. Innerhalb der Blechhülse 7, in welcher die Gewindenut 5 der Mutter eingeformt ist, befinden sich der erste Ring 8 und der zweite Ring 9 in einem axialen Abstand, der so groß wie der Durchmesser der darin angeordneten Kugeln 3 des Kugelumlaufs ist.

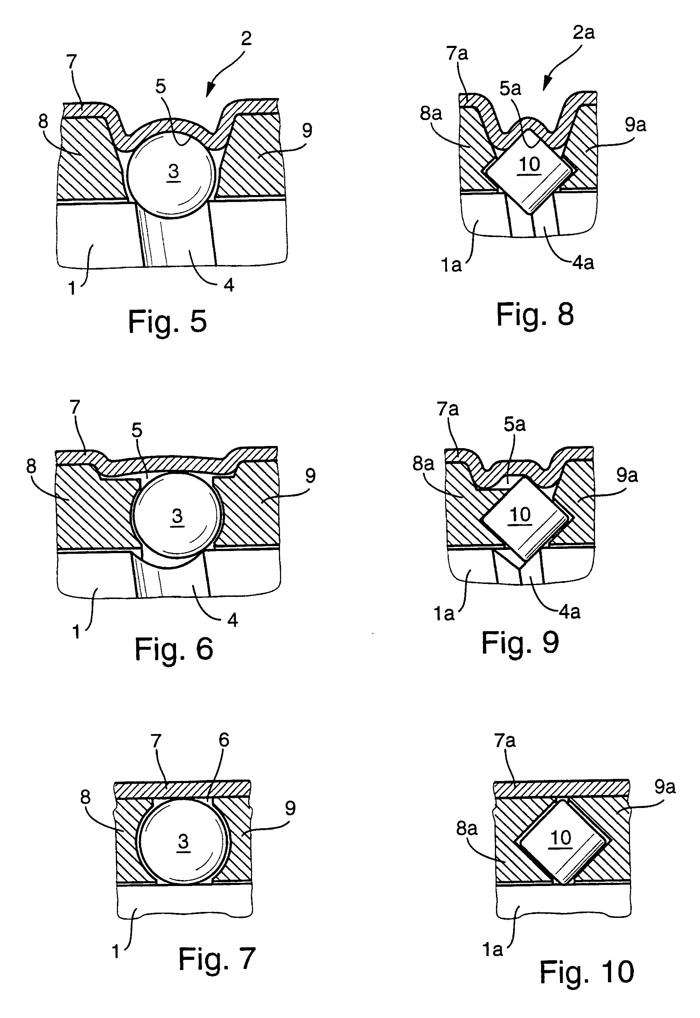

Aus den Figuren 5 bis 7 geht hervor, wie jeweils eine Kugel 3 des Umlaufs von dem ersten Ring 8 und dem zweiten Ring 9 aus der Gewindenut 4 der Spindel 1 herausgehoben und in den Überleitkanal 6 der Mutter 2 eingefördert wird. Entsprechendes zeigen die Figuren 8 bis 10 für einen Gewindetrieb, in welchem nicht Kugeln, sondern Rollen 10 als Wälzkörper in einem Umlauf angeordnet sind. In diesen Darstellungen sind die Bezugszahlen der geringfügig abgewandelten Teile des Gewindetriebes mit dem Zusatz "a" versehen. So befindet sich eine Rolle 10 jeweils in der Gewindenut 4a der Spindel 1a und in der Gewindenut 5a der Mutter 2a, welche die Blechhülse 7a, den ersten Ring 8a und den zweiten Ring 9a enthält.

Der in Figur 4 dargestellte Gewindetrieb unterscheidet sich von dem Gewindetrieb nach den Figuren 1 bis 3 nur dadurch, dass innerhalb der Blechhülse 7 der Mutter 2 zusätzlich ein Gleitlagerring 11 zur Lagerung der Spindel 1 angeordnet ist.

### Bezugszahlenliste

- 1: Spindel
- 1a: Spindel
- 2: Mutter
- 2a: Mutter
- 3: Kugel
- 4: Gewindenut der Spindel
- 4a: Gewindenut der Spindel
- 5: Gewindenut der Mutter
- 5a: Gewindenut der Mutter
- 6: Überleitkanal
- 7: Blechhülse
- 7a: Blechhülse
- 8: erster Ring
- 8a: erster Ring
- 9: zweiter Ring
- 9a: zweiter Ring
- 10: Rolle
- 11: Gleitlagerring

## Patentansprüche

1. Gewindetrieb mit einer Spindel (1) und einer diese umgebenden Mutter (2) sowie mit dazwischen angeordneten Wälzkörpern, welche in einer an der äußeren Oberfläche der Spindel (1) ausgebildeten Gewindenut (4) und in einer entsprechenden, an der inneren Oberfläche der Mutter (2) ausgebildeten Gewindenut (5) abrollbar angeordnet sind, und mit einer an der Mutter (2) angeordneten Vorrichtung für die Rückführung der Wälzkörper von einem Auslaufende einer gemeinsamen Windung der Gewindenuten (4, 5) zu einem Einlaufende dieser Windung, wobei die Mutter (2) aus einer Blechhülse (7) zusammengesetzt ist und wobei die Gewindenut (5) der Mutter (2) unmittelbar in der Blechhülse (7) eingeformt ist, **dadurch gekennzeichnet, dass** die Mutter zusätzlich zu der Blechhülse aus einem darin eingesetzten, von einem ersten Ring (8) und einem zweiten Ring (9) gebildeten Aushebe- und Umlenkstück für die Wälzkörper zusammengesetzt ist.

2. Gewindetrieb nach Anspruch 1, **dadurch gekennzeichnet, dass** der erste Ring (8) und der zweite Ring (9) in der Blechhülse (7) im Bereich der Gewindenut (5) der Mutter (2) in einem axialen Abstand voneinander gehalten sind, welcher der Dickenabmessung der Wälzkörper entspricht.

3. Gewindetrieb nach Anspruch 1, **dadurch gekennzeichnet, dass** für die Rückführung der Wälzkörper von dem Auslaufende der gemeinsamen Windung der Gewindenuten (4, 5) zu dem Einlaufende dieser Windung ein Überleitkanal (6) in der Blechhülse (7) in einem Umfangsbereich eingeformt ist.

4. Gewindetrieb nach Anspruch 1, **dadurch gekennzeichnet, dass** als Wälzkörper Kugeln (3) verwendet sind.

5. Gewindetrieb nach Anspruch 1, **dadurch gekennzeichnet, dass** als Wälzkörper Rollen (10) verwendet sind.

6. Gewindetrieb nach Anspruch 1, **dadurch gekennzeichnet, dass** in der Blechhülse (7) zusätzlich zu dem ersten Ring (8) und dem zweiten Ring (9) des Aushebe- und Umlenkstücks ein Gleitlagerring (11) eingesetzt ist.

## Claims

1. Screw drive having a spindle (1), a nut (2) surrounding this spindle (2), and rolling elements arranged therebetween, which rolling elements can roll in a screw groove (4) configured on the outer surface of the spindle (1) and in a corresponding screw groove (5) configured on the inner surface of the nut (2), the screw drive further having a device arranged on the nut (2) for returning the rolling elements from a run-out end of a common turn of the screw grooves (4, 5) to a run-in end of this turn, the nut (2) being composed of a sheet metal sleeve (7), and the screw groove (5) of the nut (2) being formed directly in the sheet metal sleeve (7), **characterised in that,** in addition to the sheet metal sleeve, the nut is additionally composed of a lifting and deflecting component for the rolling elements that is inserted therein and formed by a first ring (8) and a second ring (9).

2. Screw drive according to claim 1, **characterised in that** the first ring (8) and the second ring (9) are retained in the sheet metal sleeve (7) at an axial distance from each other in the region of the screw groove (5) of the nut (2), which axial distance corresponds to the thickness dimension of the rolling elements.

3. Screw drive according to claim 1, **characterised in that**, for returning the rolling elements from the run-out end of the common turn of the screw grooves (4, 5) to the run-in end of this turn, a transfer channel (6) is formed in the sheet metal sleeve (7) in a peripheral region.

4. Screw drive according to claim 1, **characterised in that** balls (3) are used as rolling elements

5. Screw drive according to claim 1, **characterised in that** rollers (10) are used as rolling elements.

6. Screw drive according to claim 1, **characterised in that** a sliding bearing ring (11) is inserted into the sheet metal sleeve (7) in addition to the first ring (8) and the second ring (9) of the lifting and deflecting component.

## Revendications

1. Mécanisme à vis comprenant une vis (1) et un écrou (2) qui entoure cette dernière, ainsi que des corps roulants (12) disposés entre ces éléments pour rouler dans une gorge de filet (4) formée sur la surface extérieure de la vis (1) et dans une gorge de filet (5) correspondante, formée dans la surface intérieure de l'écrou (2), et comprenant un dispositif prévu sur l'écrou (2) pour le retour des corps roulants d'une extrémité de sortie d'une spire commune des gorges de filet (4, 5) vers une extrémité d'entrée de cette spire, dans lequel l'écrou (2) est composé d'un manchon en tôle (7), la gorge de filet (5) de l'écrou (2) étant formée directement dans le manchon en tôle (7),
**caractérisé en ce que**
l'écrou est aussi composé, en supplément du manchon en tôle, d'un élément d'éjection et de renvoi pour les corps roulants, qui y est inséré et est composé d'une première bague (8) et d'une deuxième bague (9).

2. Mécanisme à vis selon la revendication 1,
**caractérisé en ce que**
la première bague (8) et la deuxième bague (9) sont tenues dans le manchon en tôle (7), dans la région de gorge de filet (5) de l'écrou (2) à une distance d'écartement axiale mutuelle qui correspond à la dimension de l'épaisseur des corps roulants.

3. Mécanisme à vis selon la revendication 1,
**caractérisé en ce que**
pour le retour des corps roulants de l'extrémité de sortie de la spire commune des gorges de filets (4, 5) vers l'extrémité d'entrée de cette spire, un canal de transfert (6) est formé dans le manchon en tôle (7) dans une région de la périphérie.

4. Mécanisme à vis selon la revendication 1,
**caractérisé en ce qu'**
on utilise des billes (3) en tant que corps roulants.

5. Mécanisme à vis selon la revendication 1,
**caractérisé en ce qu'**
on utilise des rouleaux (10) en tant que corps roulants.

6. Mécanisme à vis selon la revendication 1,
**caractérisé en ce que**
dans le manchon en tôle (7) une bague de palier lisse (11) est insérée en supplément de la première bague (8) et de la deuxième bague (9) de l'élément d'éjection et de renvoi.
